Europäisches Patentamt

European Patent Office

Office européen des brevets

(19)

(11) Publication number: **0 002 559**
**B1**

(12) **EUROPEAN PATENT SPECIFICATION**

(45) Date of publication of patent specification: 05.05.82

(51) Int. Cl.³: **C 08 F 6/24, C 08 F 220/44**

(21) Application number: **78200368.5**

(22) Date of filing: **14.12.78**

(54) Process for the removal of non-converted monomers from a copolymer of acrylonitrile.

(30) Priority: **15.12.77 NL 7713884**

(43) Date of publication of application:
**27.06.79 Bulletin 79/13**

(45) Publication of the grant of the patent:
**05.05.82 Bulletin 82/18**

(84) Designated Contracting States:
**BE CH DE FR GB IT NL SE**

(56) References cited:
**DE - A - 2 707 816**
**US - A - 2 451 332**
**US - A - 3 926 927**

(73) Proprietor: **STAMICARBON B.V.**
**Postbus 10**
**NL-6160 MC Geleen (NL)**

(72) Inventor: **Henskens, Hubertus Johannes Gerardus**
**Kerkstraat 3**
**NL-6176 AP Spaubeek (NL)**

(74) Representative: **Hatzmann, Marinus Jan et al,**
**Postbus 9**
**NL-6160 MA Geleen (NL)**

Courier Press, Leamington Spa, England.

# Process for the removal of non-converted monomers from a copolymer of acrylonitrile.

The invention relates to a process for the removal of non-converted monomers from a copolymer of acrylonitrile or methacrylonitrile, and styrene, halogenated styrene, $\alpha$-methylstyrene or a mixture thereof, wherein a suspension of copolymer particles in water is continuously treated with steam.

Such a process is known from the Dutch patent application 7702443 corresponding to DE—A—2707816, wherein a batchwise, or continuous process for the removal of non-converted monomers from styrene-acrylonitrile copolymers by way of steam distillation using elevated temperature and pressure, is described. From the values of the so-called velocity coefficient for the monomer removal given in these patent applications, can be concluded, that the time required to obtain a sufficient removal of monomers, lies in the region of 2 to 8 hours.

A disadvantage of this process is that it is rather time consuming, and the required apparatus is comparatively large. Consequently, the properties of the end product, such as gloss, and the like, may deteriorate owing to the prolonged treatment. A further disadvantage is, that there is a risk of agglomeration of the copolymer particles, which may affect the product properties and foul the apparatus. To prevent frothing problems, frothing-inhibitors should moreover be added.

When copolymers are prepared on the basis of acrylonitrile, e.g. styrene-acrylonitrile copolymers (SAN), graft copolymers of styrene and acrylonitrile on a rubber, the problem arises that an amount of non-converted monomer is still present in the polymerization mixture after termination of the polymerization. This problem arises in particular when the polymerization is effected in emulsion or suspension, but is also of importance to solution and mass polymerization processes.

In many instances it is less desirable that non-converted monomer is retained. One of the reasons therefor resides in the properties of these monomers. The presense of acrylonitrile and, e.g., styrene or $\alpha$-methyl styrene in styrene-acrylonitrile copolymers (SAN) or in graft copolymers of styrene and acrylonitrile on a rubber (ABS) is undesirable for environmental and toxicological reasons. In addition, rather stringent demands are made on the migration of monomers from these copolymers when they can get into contact with food-stuffs. It is furthermore undesirable that these monomers are released when the copolymer is being processed.

From an economical point of view it is to be preferred to convert the monomers as much as possible into copolymer. To achieve this, many suggestions have been made, such as raising the degree of conversion during the polymerization reaction. Thus it is possible in theory to convert virtually all monomers into copolymer. However, this considerably lengthens the time required for the polymerization, which is undesirable.

From the US-patent specification 2,451,332 it is known to remove unconverted monomers from a latex by introducing steam into a vessel containing the latex.

If this process would be used for suspensions, the same problems would occur as in the cited Dutch patent application.

The US-patent specification 3,926,927 describes the use of a sieve tray column for the removal of monomers from acrylonitrile suspension. However no indication is given about circumstances such as pressure, temperature and residence time.

The object of the invention is to provide a cheap and simple process for the continuous removal of non-converted monomers from a copolymer of acrylonitrile in which such disadvantages are mitigated.

The invention is characterized in that said suspension is continuously contacted with a counter-current flow of stream in a sieve tray column at a temperature of 95—150°C and an absolute pressure of 75—500 kPa, wherein the residence time of the suspension in the column is at most 15 minutes.

In dependence on the copolymer and the method of preparation, the weight percentage of solid particles in the suspension is 5—80% by weight of the total suspension.

'Suspension' here denotes a dispersion of solid copolymer particles in water that is not stable, i.e. when this dispersion is allowed to stand unstirred, the solid particles will settle.

The suspension may consist of particles of a copolymer from a so-called mass, solution, or suspension polymerization processes or may consist of the coagulated latex obtained from an emulsion polymerization which coagulation has substantially taken place before the counter current-treatment will have taken place.

The process according to the invention is carried out in a sieve-tray column. With this device an optimal result is obtained with respect to monomer content, whereas no problems occur with product quality. Furthermore, due to the small residence time relatively small equipment is required, resulting in low investments. To achieve optimum effect, the residence time of the suspension in such a column is between 1 and 6 minutes.

The process according to the invention provides the great advantage that the monomers are removed very effectively from the polymer particles in a comparatively short residence time without this treatment having adverse effects on the end product. The resulting gas flow that is laden with monomers is preferably fed to a condenser in which the gas flow largely condenses to a liquid phase that may be separated into an organic and an aqueous phase. A mixture of uncondensed gases is also formed in the condensor and this mixture can be processed further in conventional manner, e.g. by feeding them to a bed of active carbon or to an incinerator. The said organic phase substantially consists of unconverted monomers, which may be recycled to the polymerization stage. The aqueous layer is preferably recycled to the gas-liquid contacting device. This provides the advantage that the purification of this aqueous phase does not present any problems. Any monomers in solution are removed again during the treatment in the gas-liquid contacting device and the aqueous phase thus purified is passed along with the suspension to a stage for separating solids.

The process according to the invention is particularly suitable for the removal of non-converted monomers from a copolymer of styrene and acrylonitrile (SAN), $\alpha$-methyl-styrene and acrylonitrile or a graft polymer of these on a rubber, e.g. polybutadiene or a butadiene-acrylonitrile rubber.

The invention will be elucidated with reference to a figure, which is a schematic representation of an apparatus which may be used in carrying out the process of the invention.

A latex from an emulsion polymerization of styrene and acrylonitrile in the presence of polybutadiene is fed through line 1 to vessel 2, which is supplied, through line 3, with substances that effect the coagulation of the latex. Vessel 2 is provided with a line 4 with valve 5 enabling monomers released in the coagulation to be discharged. This gas flow, if so desired together with other gas flows containing the same monomers, e.g. from a reactor, centrifuges, drying stage or any intermediate stages, e.g. treatment of the solids from the centrifuges with a gas or vapour to remove the monomers present, is discharged to be processed further (for example adsorption, absorption, condensation or recycling).

Fully or partly coagulated latex is fed to sieve-tray column 7 through line 6.

If the copolymer is a copolymer containing acrylonitrile that has not been prepared in emulsion, e.g. styrene-acrylonitrile copolymers prepared in suspension, the suspension formed then may be fed directly to column 7.

Steam is fed directly to column 7 through line 8. The gaseous mixture forming in the column passes overhead through line 9 to condensor 10 in which most of the gas is condensed. A minor proportion of uncondensed gas is discharged overhead from condensor 10 through line 11 to be processed further. The liquid phase formed in condensor 10 is passed through line 12 to separator 13, in which the liquid is separated into an organic and an aqueous phase. The aqueous phase is returned to column 7 through line 14 and the organic phase is discharged through line 15, e.g. to a polymerization reactor.

An aqueous suspension of solid particles of a polymer containing acrylonitrile is discharged through conduit 16 and passed to a stage for the separation of solids.

Example

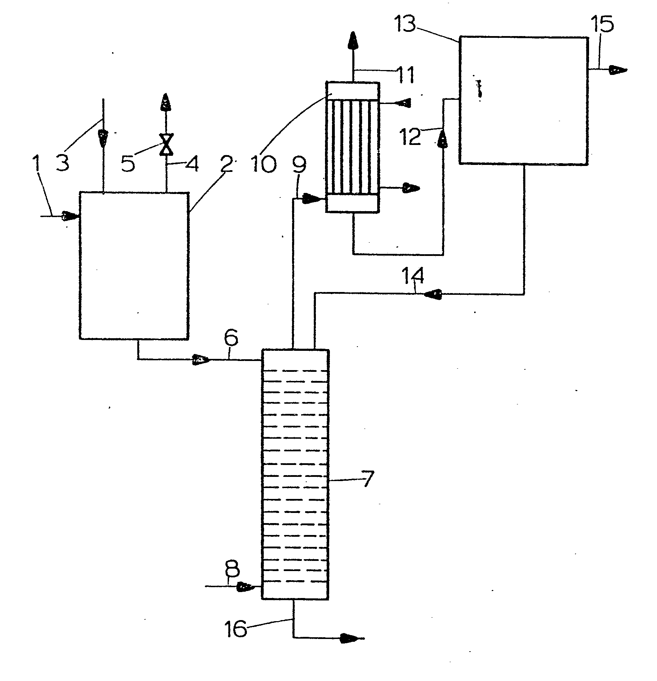

A copolymer of styrene and acrylonitrile (weight proportion 70/30) is prepared by suspension polymerization. Referring to the figure, through line 6 a suspension of said copolymer containing 50 ppm acrylonitrile and 400 ppm styrene is fed to sieve tray column 7 together with the aqueous phase from separator 13. At the bottom of this column steam of a temperature of 100°C and pressure of 100 kPa is injected. Through line 16 the suspension is removed from the column. This suspension contains 100 ppm styrene and 5 ppm acrylonitrile. Thus approximately 90% of the acrylonitrile and 75% of the styrene is removed. Through line 9, the gas-mixture from the top of the column is introduced into condensor 10 wherein part of the gas is condensed.

The non-condensed gases are removed through line 11, and the condensate is fed to separator 13. The organic phase is removed from the separator through line 15, whereas the aqueous phase is returned to the sieve tray column 7, through line 14.

**Claims**

1. Process for the removal of non-converted monomers from a copolymer of acrylonitrile or methacrylonitrile, and styrene, halogenated styrene, $\alpha$-methylstyrene or a mixture thereof, wherein a suspension of copolymer particles in water is continuously treated with steam, characterized in that said suspension is contacted with a counter-current flow of stream in a sieve tray column at a temperature of 95—150°C and in absolute pressure of 75—500 kPa, and wherein the residence time of the suspension in the column is at most 15 minutes.

2. Process according to claim 1, characterized in that the weight percentage of solid copolymer particles in the suspension amounts to 5—80% by weight of the total suspension.

3. Process according to claim 1, characterized in that the residence time ranges between 1 and 6 minutes.

4. Process according to any one of the claims 1—3, characterized in that the gaseous mixture formed in the gas-liquid contacting device is condensed and the aqueous phase is recycled to the gas-liquid contacting device.

## Patentansprüche

1. Verfahren zum Entfernen nichtumgesetzter Monomeren aus einem Copolymerisat von Acrylnitril oder Methacrylnitril und Styrol, halogeniertem Styrol, α-Methylstyrol oder einem Gemisch davon, wobei eine Suspension von Copolymerisatsteilchen in Wasser kontinuierlich mit Dampf behandelt wird, dadurch gekennzeichnet, dass die Suspension in einer Siebplattenkolonne bei einer Temperatur zwischen 95 und 150°C und einem Absolutdruck zwischen 75 und 500 kPa mit einem Gegenstrom aus Dampf in Berührung gebracht wird, wobei die Verweilzeit der Suspension in der Kolonne nicht mehr als 15 Minuten beträgt.

2. Verfahren nach Anspruch 1, dadurch gekennzeichnet, dass der Gewichtsanteil der festen Copolymerisatsteilchen in der Suspension 5 bis 80 Gew.-% der gesamten Suspension beträgt.

3. Verfahren nach Anspruch 1, dadurch gekennzeichnet, dass die Verweilzeit zwischen 1 und 6 Minuten liegt.

4. Verfahren nach einem der Ansprüche 1 bis 3, dadurch gekennzeichnet, dass das in der Gas-Flüssigkeitsberührungsvorrichtung gebildete gasförmige Gemisch kondensiert und die wässerige Phase der Gas-Flüssigkeitsberührungsvorrichtung zurückgeführt wird.

## Revendications

1. Procédé d'élimination de monomères non convertis d'un copolymère d'acrylonitrile ou méthacrylonitrile et de styrène, styrène halogéné, α-méthylstyrène ou un mélange de ceux-ci, dans lequel procédé une suspension de particules de copolymère dans l'eau est traitée en continu avec de la vapeur, caractérisée en ce que ladite suspension est mise en contact avec un contre-courant de vapeur dans une colonne à plateaux-tamis, à une température située entre 95—150°C et à une pression absolue de 75—500 kPa, alors que la durée du séjour de la suspension dans la colonne est tout au plus de 15 minutes.

2. Procédé selon la revendication 1, caractérisé en ce que le pourcentage en poids de particules solides de copolymère dans la suspension est de 5—80 % en poids par rapport à la suspension totale.

3. Procédé selon la revendication 1, caractérisé en ce que la durée de séjour se situe entre 1 et 6 minutes.

4. Procédé selon l'une ou l'autre des revendications 1 à 3, caractérisé en ce que le mélange de gas formé dans le dispositif contacteur gaz-liquide est condensé et que la phase acqueuse est recyclée vers ce dispositif.

0 002 559

1